# EUROPÄISCHE PATENTSCHRIFT

(11) **EP 4 389 460 B1**
(45) Veröffentlichungstag und Bekanntmachung des Hinweises auf die Patenterteilung: **24.09.2025**
(21) Anmeldenummer: 23217575.2
(22) Anmeldetag: 18.12.2023
(51) Int. Cl.: B60C 11/03, B60C 11/04, B60C 11/13

(54) **FAHRZEUGLUFTREIFEN**
PNEUMATIC TYRE FOR VEHICLES
BANDAGE PNEUMATIQUE POUR VÉHICULE

(30) Priorität: 19.12.2022 DE 102022213910
(43) Veröffentlichungstag der Anmeldung: 26.06.2024
(73) Patentinhaber: Continental Reifen Deutschland GmbH, 30175 Hannover (DE)
(72) Erfinder: Gastrich, Holger, 30175 Hannover (DE); Proksa, Andrej, 30175 Hannover (DE)
(74) Vertreter: Continental Corporation

(56) Entgegenhaltungen:
- JP-A- 2006 137 239
- JP-A- 2013 043 614
- JP-A- H04 201 606
- JP-A- H04 334 606
- US-A- 5 450 885
- US-A1- 2001 032 691

## Beschreibung

Die Erfindung betrifft einen Fahrzeugluftreifen mit einem Laufstreifen mit Profilpositiven, wie Profilrippen, welche beim Abrollen des Reifens mit dem Untergrund in Kontakt tretende Außenflächen aufweisen, und mit zumindest einer in Umfangsrichtung umlaufenden, auf die vorgesehene Profiltiefe ausgeführten Umfangsrille, welche, im Querschnitt betrachtet, zwei einander gegenüberliegende Rillenflanken und einen die Rillenflanken miteinander verbindenden insgesamt U-förmig und symmetrisch zur Mittelebene der Umfangsrille gerundeten Rillengrund und eine vom Rillengrund bis zu den Außenflächen größer werdende Breite aufweist, wobei die Rillenflanken, im Querschnitt betrachtet, durchgehend wellenförmig gestaltet sind mit zumindest einem nach außen gerundeten, einen Wellenberg bildenden Abschnitt und mit zumindest einem, nach innen gerundeten, ein Wellental bildenden Abschnitt, wobei diese Abschnitte tangential ineinander übergehen und wobei die radial innersten Abschnitte der Rillenflanken in den Rillengrund tangential, also knickfrei, übergehen.

Fahrzeugluftreifen weisen üblicherweise Laufstreifen auf, die, abgesehen von am Rillengrund lokal ausgebildeten Treadwearindikatoren, Hauptrillen besitzen, die in der vorgesehenen maximalen Profiltiefe ausgeführt sind und beispielsweise in Umfangsrichtung umlaufende Umfangsrillen, diagonal bzw. schräg über zumindest einen Teil der Laufstreifenbreite verlaufende Rillen oder Querrillen sind. Insbesondere Nutzfahrzeugreifen sind meistens mit einer Anzahl von Umfangsrillen versehen, welche den Laufstreifen in Profilrippen, die selbst wiederum durch Rillen oder Einschnitte zusätzlich strukturiert sein können, gliedern. Derartige Umfangsrillen können in Umfangsrichtung gerade umlaufende oder in Wellen- oder Zickzackform umlaufende Rillen sein. Üblich ist ferner eine Ausführung der Umfangsrillen mit Rillenflanken, die, im Querschnitt der Umfangsrillen betrachtet, gerade verlaufen, also abgesehen vom Rillengrund ebene Flächen sind oder ebene Flächenabschnitte aufweisen und zur radialen Richtung unter einem spitzen Winkel von beispielsweise 2° bis insbesondere 10° verlaufen, derart, dass ihre Breite vom Rillengrund bis zur Laufstreifenperipherie größer wird. Insbesondere bei Laufstreifen von Nutzfahrzeugreifen sind die Übergangsbereiche von derartigen Rillenflanken zum Rillengrund in Folge der beim Abrollen der Reifen auftretenden großen Belastungen rissanfällig. Risse in diesen Bereichen beeinträchtigen die Haltbarkeit und dadurch die Lebensdauer der Reifen.

Ein Fahrzeugluftreifen der eingangs genannten Art ist beispielsweise aus der JP H04 334 606 A bekannt. Dieser Reifen weist einen Laufstreifen mit vier in Draufsicht zick-zack-förmig verlaufenden Umfangsrillen auf, welche, im Querschnitt betrachtet, einen U-förmig und symmetrisch zur Mittelebene der Umfangsrille gerundeten Rillengrund und eine vom Rillengrund zu den Außenflächen der Profilpositive größer werdende Breite aufweisen. Die Rillenflanken sind, im Querschnitt betrachtet, durchgehend wellenförmig gestaltet und setzen sich aus nach außen gerundeten, je einen Wellenberg bildenden Abschnitten und nach innen gerundeten, je ein Wellental bildenden Abschnitten zusammen, wobei diese Abschnitte tangential ineinander übergehen und wobei der radial innerste Abschnitt tangential in den Rillengrund übergeht. Solche Umfangsrillen sollen - bedingt durch die Unterdrückung der Bildung von stehenden Schallwellen - für ein verringertes Reifen-Fahrbahn-Geräusch sorgen, wobei eine gute Nässe-Performance erhalten bleibt.

Aus der EP 3 888 948 A1 ist ein Fahrzeugluftreifen, welcher ein Nutzfahrzeugreifen ist, bekannt. Der Laufstreifen dieses Fahrzeugluftreifen ist mit einer Vielzahl von Umfangsrillen versehen, wobei die beiden am weitesten laufstreifenrandseitig verlaufenden Umfangsrillen breite, auf Profiltiefe ausgeführte Umfangsrillen sind, welche mit im Querschnitt gerade verlaufenden Rillenflanken versehen sind.

Aus der DE 10 2008 037 477 A1 ist ein Fahrzeugluftreifen bekannt, welcher ebenfalls ein Nutzfahrzeugreifen ist und dessen Laufstreifen mit einer Anzahl von in Umfangsrichtung umlaufenden Umfangsrillen versehen ist. Zumindest eine Umfangsrille weist eine Rillenflanke auf, welche mit Vertiefungen versehen ist, die beispielsweise rillenartig ausgebildet sind und sich in Umfangsrichtung erstrecken. Die Vertiefungen sind im radialen Schnitt durch die Rillenflanke betrachtet, gerundet ausgeführt und sollen dazu beitragen, den Übergangsbereich dieser Rillenflanke zum Rillengrund unter Belastungen zu entlasten, um eine Reduktion der Rissanfälligkeit im Bereich des Rillengrundes zu erreichen.

Auch wenn diese bekannte Lösung eine gewisse Reduktion der Rissanfälligkeit im Bereich des Rillengrundes bewirkt, ist es bislang nicht gelungen, Rillenflanken eine Geometrie zu verleihen, mit welcher sich das Entstehen von Rissen im Bereich des Rillengrundes, nahezu verlässlich vermeiden oder zumindest merklich reduzieren lässt. Hier setzt nun die Erfindung ein, deren Aufgabe darin besteht, bei einem Fahrzeugluftreifen der eingangs genannten Art die Rillenflanken von Umfangsrillen derart auszuführen, dass die erwähnte Rissanfälligkeit vermieden wird und dadurch die Haltbarkeit des Reifens merklich erhöht wird.

Gelöst wird die gestellte Aufgabe erfindungsgemäß dadurch, dass die Rillenflanken entweder jeweils genau drei der einen Wellenberg bzw. ein Wellental bildenden Abschnitte aufweisen, wobei die Abschnitte in radialer Richtung jeweils über eine Erstreckungslänge von 20 % bis 30 % der Profiltiefe verlaufen oder dass die Rillenflanken jeweils genau zwei der einen Wellenberg bzw. ein Wellental bildenden Abschnitte aufweisen, wobei die Abschnitte in radialer Richtung jeweils über eine Erstreckungslänge von 25 % bis 40 % der Profiltiefe verlaufen.

Derart in Wellenform ausgeführte Rillenflanken komprimieren und verformen sich unter Last analog einer Feder. Sie sind dadurch in der Lage, zumindest Großteils die Spannungen und Kräfte, die auf den Laufstreifen des Reifens unter Belastung wirken, aufzunehmen bzw. zu absorbieren. Nachdem die Rillenflanken Verformungsenergie nahezu optimal aufnehmen können, übertragen sie auch nur wenig Energie auf den Rillengrund. Damit wird auf eine besonders effektive Weise dafür gesorgt, dass die Rissanfälligkeit im Bereich des Rillengrundes deutlich reduziert ist, wenn nicht sogar vermieden ist, und die Haltbarkeit des Reifen deutlich erhöht wird.

Bei bevorzugten Ausführungen sind entweder die radial äußersten Abschnitte und/oder die radial innersten Abschnitte der Rillenflanken jeweils ein Wellenberg oder ein Wellental. Die Ausgestaltung der Rillenflanken lässt sich daher auf eine besonders variable Weise an den jeweiligen Reifentyp und an die Laufstreifenprofilierung bzw. die Position der Umfangsrillen im Laufstreifen anpassen.

Für eine besonders gute Aufnahme und Verteilung der Verformungsenergie unter Last ist es vorteilhaft, wenn die Abschnitte, welche die Wellenform der Rillenflanken bilden, in radialer Richtung Erstreckungslängen aufweisen, die weitgehend übereinstimmen oder jeweils um höchstens 15 % kleiner sind als die größte der Erstreckungslängen und mit Radien gerundet sind, welche 50 % bis 150 % der Erstreckungslänge des jeweiligen Abschnittes betragen.

Besonders bevorzugt ist es ferner, wenn die Rillenflanken der Umfangsrille gleich gestaltet sind, um derart Verformungsenergie besonders gleichmäßig auf das Gummimaterial der Profilpositive zu verteilen. In diesem Zusammenhang ist es ferner von Vorteil, wenn die Rillenflanken der Umfangsrille symmetrisch zur Mittelebene der Umfangsrille ausgebildet sind.

Wie bereits erwähnt, ist bei einer bevorzugten Ausführung vorgesehen, dass jeweils der radial äußerste, die Wellenform bildende Abschnitt der Rillenflanken ein Wellenberg ist. Bei dieser Ausgestaltung ist es von Vorteil, wenn bei Rillenflanken mit jeweils genau drei der einen Wellenberg bzw. ein Wellental bildenden Abschnitte der radial äußerste Abschnitt tangential in einem mit einem Radius von insbesondere 0,7 mm bis 1,2 mm gerundeten Übergangsabschnitt übergeht, welcher in die Außenfläche - in die Profilpositivfläche - übergeht.

Bei einer bevorzugten Ausführung weist der Fahrzeugluftreifen einen Laufstreifen mit mehreren Umfangsrillen auf, deren Rillenflanken durchgehend wellenförmig gestaltet sind.

Bevorzugt sind ferner Ausführungen, bei welchen der Laufstreifen des Fahrzeugluftreifens zumindest eine gerade oder zumindest eine wellenförmig in Umfangsrichtung umlaufende Umfangsrille aufweist, deren Rillenflanken durchgehend wellenförmig gestaltet sind.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt des Laufstreifenbereiches eines Fahrzeugluftreifens,
Fig. 2 eine Draufsicht auf einen Umfangsabschnitt des Laufstreifens
Fig. 3 einen Schnitt entlang der Linie III-III der Fig. 2 und
Fig. 4 eine alternative Ausführung in einer zu Fig. 3 analogen Schnittdarstellung.

Gemäß der Erfindung ausgeführte Fahrzeugluftreifen sind Reifen in Diagonal- oder Radialbauart eines beliebigen Typs, insbesondere Reifen für Nutzfahrzeuge, wie Lastkraftwagen oder Busse, aber auch Reifen für Personenkraftwagen oder Light-Trucks.

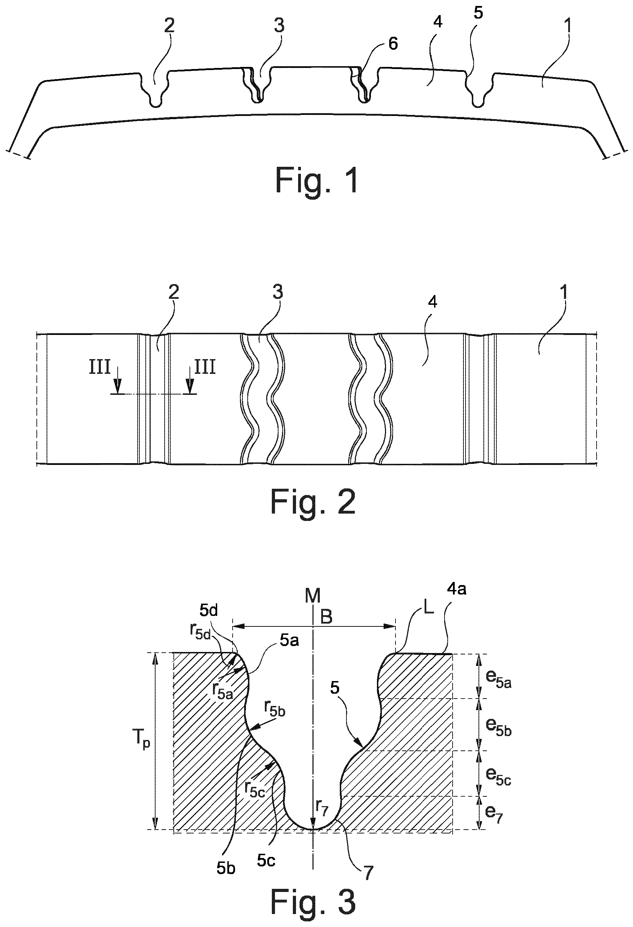

Die Figuren 1 bis 3 zeigen eine Ausführungsform der Erfindung bei einem Laufstreifen 1 eines Nutzfahrzeugreifen. Der in Fig. 1 und Fig. 2 gezeigte Laufstreifen 1 weist eine Profilierung mit im Beispiel vier auf die vorgesehene Profiltiefe Tₚ (Fig. 3) ausgeführte Umfangsrillen 2, 3 auf, wobei die Umfangsrillen 3 im mittleren Bereich des Laufstreifens 1 und die Umfangsrillen 2 in den seitlichen Bereichen des Laufstreifens 1 verlaufen. Die Umfangsrillen 2 sind im Beispiel gerade in Umfangsrichtung umlaufende Rillen, die Umfangsrillen 3 wellenförmig, insbesondere weitgehend gleichförmig wellenförmig, verlaufende Umfangsrillen. Sowohl die seitlichen Umfangsrillen 2 als auch die mittleren Umfangsrillen 3 weisen im dargestellten Beispiel den in Fig. 3 vergrößert gezeigten Rillenquerschnitt auf. Die Umfangsrillen 2, 3 gliedern den Laufstreifen 1 in fünf Profilrippen 4. Die Profilrippen 4 weisen eine beim Abrollen des Reifens mit dem Untergrund in Kontakt kommende Außenfläche 4a (Fig. 3), auch Positivfläche genannt, auf und können auf nicht gezeigte Weise durch Querrillen in Profilblöcke gegliedert sein, durch sonstige Rillen profilblockartig strukturiert sein und darüber hinaus auch schmale Rillen, insbesondere Einschnitte, aufweisen. Rillen und Einschnitte umfassen die sogenannte Negativfläche der Profilrippen 4. Der Laufstreifen 1 kann bei anderen Ausführungen mehr oder weniger als vier Umfangsrillen aufweisen.

Bei der in Fig. 1 bis 3 gezeigten Ausführung sind die Umfangsrillen 2, 3, im Querschnitt betrachtet, bezüglich einer mittig in Umfangsrichtung der jeweiligen Umfangsrille 2, 3 umlaufenden und in radialer Richtung orientierten Mittelebene M symmetrisch gestaltet. Bei den in Umfangsrichtung wellenförmig verlaufenden Umfangsrillen 3 folgt die Mittelebene M dieser Wellenform. Jede Umfangsrille 2, 3 ist von zwei symmetrisch zur Mittelebene M ausgeführten und einander gegenüberliegenden Rillenflanken 5 (Umfangsrillen 2) und 6 (Umfangsrillen 3) und einem Rillengrund 7 begrenzt. Der Rillengrund 7 ist im Rillenquerschnitt insgesamt U-förmig und symmetrisch zur erwähnten Mittelebene M gerundet, insbesondere entlang eines Kreisbogens mit einem Radius r₇ von 7 % bis 30 % der Profiltiefe T_{P}. Die ausgehend von der tiefsten Stelle des Rillengrundes 7 ermittelte radiale Erstreckung e₇ des Rillengrundes 7 entspricht maximal dem Radius r₇ und ist insbesondere um 10 % bis 20 % geringer als der Radius r₇.

Die Ausgestaltung der Rillenflanken 5, 6 wird nun anhand der Fig. 3 und anhand der Rillenflanken 5 einer der Umfangsrillen 2 näher erläutert. Jede Rillenflanke 5 ist durchgehend wellenförmig verlaufend gestaltet und setzt sich - abgesehen von einem Übergangsabschnitt 5d - aus drei tangential (knickfrei) ineinander übergehenden, gerundeten Abschnitten 5a bis 5c zusammen. Der radial innerste gerundete Abschnitt 5c ist ein Wellenberg, welcher tangential in den Rillengrund 7 übergeht. Der radial äußerste, die Wellenform mitbildende Abschnitt 5a ist ebenfalls ein Wellenberg. Dieser Abschnitt 5a geht bei der gezeigten Ausführung in den nach außen gerundeten Übergangsabschnitt 5d tangential über, welcher in die Außenfläche 4a übergeht und mit einem Radius r_{5d} von 0,7 mm bis 1,2 mm gerundet ist. Die Abschnitte 5a bis 5c erstrecken sich in radialer Richtung über Erstreckungslängen e₅ₐ, e_{5b} und e_{5c} von jeweils 20 % bis 30 % der Profiltiefe Tₚ.

Bei einer alternativen, gesondert nicht dargestellten Ausführung, welche nicht unter den Schutzbereich der Patenansprüche fällt, weisen die Rillenflanken fünf abwechselnd als Wellenberg und Wellental ausgebildete gerundete Abschnitte auf, wobei drei Abschnitte Wellenberge sind. Bei fünf die Wellenform bildenden Abschnitten weisen diese insbesondere Erstreckungslängen von jeweils 12 % bis 18 % der Profiltiefe Tₚ auf. Der Rillengrund 7 und der optional vorgesehene Übergangsabschnitt 5d erstrecken sich über den verbliebenen Teil der Profiltiefe Tₚ.

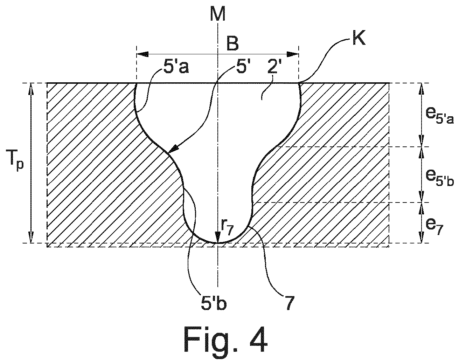

Fig. 4 zeigt eine Ausführung einer Umfangsrille 2' mit Rillenflanken 5' mit einer Wellenform aus je einem Wellental, welches den radial äußeren Abschnitt 5'a bildet und unmittelbar an die Außenfläche 4a anschließt, und je einem Wellenberg, welcher den radial inneren Abschnitt 5'b bildet und tangential in den Rillengrund 7 übergeht. Alternativ wird die Wellenform der Rillenflanken 5' auf analoge Weise von zwei Wellenbergen und zwei Wellentälern gebildet., wobei diese Ausführung nicht unter den Schutzbereich der Patentansprüche fällt. Bei zwei Abschnitten 5'a, 5'b erstrecken sich diese über Erstreckungslängen e_{5'a}, e_{5'b} von etwa 25% bis 40% der Profiltiefe Tₚ, bei vier Abschnitten beträgt ihre Erstreckungslänge insbesondere jeweils 13% bis 20% der Profiltiefe Tₚ.

Bei weiteren Ausführungen, welche ebenfalls nicht unter den Schutzbereich der Patentansprüche fallen, weisen die Rillenflanken bis zu sieben die Wellenform bildende gerundete Abschnitte auf, je tiefer die Umfangsrille umso mehr gerundeten Abschnitte können die Rillenflanken besitzen.

Wie Fig. 3 zeigt, sind die Abschnitte 5a bis 5c mit Radien r₅ₐ, r_{5b} und r_{5c} gerundet, welche 50% bis 150 % der jeweiligen Erstreckungslänge e₅ₐ, e_{5b} und e_{5c} betragen. Analoges gilt für Ausführungen mit zwei oder mehr als drei Abschnitten. Dabei können die Erstreckungslängen e₅ₐ, e_{5b} und e_{5c} und die Radien r₅ₐ, r_{5b} und r_{5c} jeweils weitgehend übereinstimmen oder sich innerhalb der erwähnten Bereiche voneinander unterscheiden. Auch die einander gegenüberliegenden Rillenflanken 5, 6 einer Umfangsrille 2, 3 können unterschiedlich gestaltet sein.

Zwischen den Rändern L der radial äußersten Übergangsabschnitte 5d an der Außenfläche 4a (Fig. 3) bzw. den Kanten K der Rillenflanken 5' an der Außenfläche 4a (Fig. 4) weisen die Umfangsrillen 2, 2', 3 ihre größte Breite B auf, die bei Nutzfahrzeugreifen in der Größenordnung von 12,00 mm bis 20,00 mm, bei PKW-Reifen in der Größenordnung von 6,00 mm bis 10,00 mm beträgt.

Bei einem konkreten Ausführungsbeispiel mit drei die Wellenform bestimmenden Abschnitten 5a, 5b und 5c und mit einer Profiltiefe Tₚ von 15,00 mm betragen die Radien r₅ₐ, r_{5c} und r_{5d} in der Größenordnung von 4,00 mm, insbesondere im Bereich von 4,02 mm bis 4,04 mm, die Erstreckungslängen e₅ₐ, e_{5b} und e_{5c} in der Größenordnung von 3,80 mm bis 4,20 mm.

### Bezugszeichenliste

- 1: Laufstreifen
- 2, 2', 3: Umfangsrille
- 4: Profilrippe
- 4a: Außenfläche
- 5, 5', 6: Rillenflanke
- 5a, 5b, 5c: gerundeter Abschnitt
- 5'a, 5'b: gerundeter Abschnitt
- 5d: Übergangsabschnitt
- 7: Rillengrund
- B: größte Breite
- e₅ₐ, e_{5b}, E_{5c}: Erstreckungslänge
- e_{5'a}, e_{5'b}: Erstreckungslänge
- e₇: radiale Erstreckung des Rillengrundes
- L: Rand
- K: Kante
- M: Mittelebene
- Tₚ: Profiltiefe
- r₅ₐ, r_{5b}, r_{5c}: Radius
- r_{5d}: Radius
- r₇: Radius

## Patentansprüche

1. Fahrzeugluftreifen mit einem Laufstreifen (1) mit Profilpositiven, wie Profilrippen (4), welche beim Abrollen des Reifens mit dem Untergrund in Kontakt tretende Außenflächen (4a) aufweisen, und mit zumindest einer in Umfangsrichtung umlaufenden, auf die vorgesehene Profiltiefe (Tₚ) ausgeführten Umfangsrille (2, 2' 3), welche, im Querschnitt betrachtet, zwei einander gegenüberliegende Rillenflanken (5, 5', 6) und einen die Rillenflanken (5, 5', 6) miteinander verbindenden insgesamt U-förmig und symmetrisch zur Mittelebene (M) der Umfangsrille (2, 3) gerundeten Rillengrund (7) und eine vom Rillengrund (7) bis zu den Außenflächen (4a) größer werdende Breite aufweist, wobei die Rillenflanken (5, 5', 6), im Querschnitt betrachtet, durchgehend wellenförmig gestaltet sind mit zumindest einem nach außen gerundeten, einen Wellenberg bildenden Abschnitt (5a, 5b, 5c) und mit zumindest einem, nach innen gerundeten, ein Wellental bildenden Abschnitt (5b, 5'a), wobei diese Abschnitte (5a, 5'a, 5b, 5'b, 5c) tangential ineinander übergehen und wobei die radial innersten Abschnitte (5'b, 5c) der Rillenflanken (5, 5', 6) in den Rillengrund (7) tangential, also knickfrei, übergehen,
**dadurch gekennzeichnet,**
**dass** die Rillenflanken (5, 6) entweder jeweils genau drei der einen Wellenberg bzw. ein Wellental bildenden Abschnitte (5a, 5b, 5c) aufweisen, wobei die Abschnitte (5a, 5b, 5c) in radialer Richtung jeweils über eine Erstreckungslänge (e₅ₐ, e_{5b}, e_{5c}) von 20 % bis 30 % der Profiltiefe (Tₚ) verlaufen oder
**dass** die Rillenflanken (5') jeweils genau zwei der einen Wellenberg bzw. ein Wellental bildenden Abschnitte (5'a, 5'b) aufweisen, wobei die Abschnitte (5'a, 5'b) in radialer Richtung jeweils über eine Erstreckungslänge (e_{5'a}, e_{5'b}) von 25 % bis 40 % der Profiltiefe (Tₚ) verlaufen.

2. Fahrzeugluftreifen nach Anspruch 1, **dadurch gekennzeichnet, dass** die radial äußerten Abschnitte (5a, 5'a) der Rillenflanken (5, 5', 6) jeweils ein Wellenberg oder ein Wellental sind.

3. Fahrzeugluftreifen nach Anspruch 1, **dadurch gekennzeichnet, dass** die radial innersten Abschnitte (5'b, 5c) der Rillenflanken (5, 5', 6) jeweils ein Wellenberg oder ein Wellental sind.

4. Fahrzeugluftreifen nach einem der Ansprüche 1 bis 3, **dadurch gekennzeichnet, dass** die Abschnitte (5a, 5b, 5c, 5'a, 5'b) in radialer Richtung Erstreckungslängen (e₅ₐ, e_{5b}, e_{5c}, e_{5'a}, e_{5'b}) aufweisen, die weitgehend übereinstimmen oder jeweils um höchstens 15% kleiner sind als die größte der Erstreckungslängen und mit Radien (r₅ₐ, r_{5b}, r_{5c}) gerundet sind, welche 50% bis 150 % der Erstreckungslänge (e₅ₐ, e_{5b}, e_{5c}, e_{5'a}, e_{5'b}) des jeweiligen Abschnittes (5a, 5b, 5c, 5'a, 5'b) betragen.

5. Fahrzeugluftreifen nach einem oder mehreren der Ansprüche 1 bis 4, **dadurch gekennzeichnet, dass** die beiden Rillenflanken (5, 5', 6) der Umfangsrille (2, 2', 3) gleich gestaltet sind.

6. Fahrzeugluftreifen nach einem oder mehreren der Ansprüche 1 bis 5, **dadurch gekennzeichnet, dass** die Rillenflanken (5, 5', 6) der Umfangsrille (2, 2', 3) symmetrisch zur Mittelebene(n) der Umfangsrille (2, 2', 3) ausgebildet sind.

7. Fahrzeugluftreifen nach einem oder mehreren der Ansprüche 1 bis 6, **dadurch gekennzeichnet, dass** bei Rillenflanken (5, 6) mit jeweils genau drei der einen Wellenberg bzw. ein Wellental bildenden Abschnitte (5a, 5b, 5c) der radial äußerste, die Wellenform bildende Abschnitt (5a) der Rillenflanken (5, 6) ein Wellenberg ist, welcher tangential in einen mit einem Radius (r_{5d}) von 0,7 mm bis 1,2 mm gerundeten Übergangsabschnitt (5d) übergeht, der in die Außenfläche (4a) übergeht.

8. Fahrzeugluftreifen nach einem oder mehreren der Ansprüche 1 bis 7, **dadurch gekennzeichnet, dass** der Laufstreifen (1) mehrere Umfangsrillen (2, 2', 3) aufweist, deren Rillenflanken (5, 5', 6) durchgehend wellenförmig gestaltet sind.

9. Fahrzeugluftreifen nach einem oder mehreren der Ansprüche 1 bis 8, **dadurch gekennzeichnet, dass** der Laufstreifen (1) zumindest eine gerade in Umfangsrichtung umlaufende Umfangsrille (2) aufweist, deren Rillenflanken (5) durchgehend wellenförmig gestaltet sind.

10. Fahrzeugluftreifen nach einem oder mehreren der Ansprüche 1 bis 9, **dadurch gekennzeichnet, dass** der Laufstreifen (1) zumindest eine wellenförmig in Umfangsrichtung umlaufende Umfangsrille (3) aufweist, deren Rillenflanken (6) durchgehend wellenförmig gestaltet sind.

## Claims

1. Pneumatic vehicle tyre having a tread (1) having profile positives, such as profile ribs (4), which have outer surfaces (4a) coming into contact with the ground during rolling of the tyre, and having at least one circumferential groove (2, 2', 3) which runs around in the circumferential direction and is formed to the intended profile depth (Tₚ), which circumferential groove, when viewed in cross section, has two mutually opposite groove flanks (5, 5', 6) and a groove base (7) interconnecting the groove flanks (5, 5', 6) and rounded overall in a U shape and symmetrically to the centre plane (M) of the circumferential groove (2, 3), and has a width increasing from the groove base (7) to the outer surfaces (4a), wherein the groove flanks (5, 5', 6), when viewed in cross section, are continuously corrugated with at least one outwardly rounded portion (5a, 5b, 5c) forming a corrugation crest and with at least one inwardly rounded portion (5b, 5'a) forming a corrugation trough, wherein these portions (5a, 5'a, 5b, 5'b, 5c) transition tangentially into one another and wherein the radially innermost portions (5'b, 5c) of the groove flanks (5, 5', 6) transition tangentially into the groove base (7), that is to say without a kink,
**characterized**
**in that** the groove flanks (5, 6) either each have exactly three of the portions (5a, 5b, 5c) forming a corrugation crest or a corrugation trough, wherein, in the radial direction, the portions (5a, 5b, 5c) each run over an extension length (e₅ₐ, e_{5b}, e_{5c}) of 20% to 30% of the profile depth (Tₚ), or
**in that** the groove flanks (5') each have exactly two of the portions (5'a, 5'b) forming a corrugation crest or a corrugation trough, wherein, in the radial direction, the portions (5'a, 5'b) each run over an extension length (e_{5'a}, e_{5'b}) of 25% to 40% of the profile depth (Tₚ).

2. Pneumatic vehicle tyre according to Claim 1, **characterized in that** the radially outermost portions (5a, 5'a) of the groove flanks (5, 5', 6) are each a corrugation crest or a corrugation trough.

3. Pneumatic vehicle tyre according to Claim 1, **characterized in that** the radially innermost portions (5'b, 5c) of the groove flanks (5, 5', 6) are each a corrugation crest or a corrugation trough.

4. Pneumatic vehicle tyre according to one of Claims 1 to 3, **characterized in that**, in the radial direction, the portions (5a, 5b, 5c, 5'a, 5'b) have extension lengths (e₅ₐ, e_{5b}, e_{5c}, e_{5'a}, e_{5'b}) which largely correspond or are each less by at most 15% than the largest of the extension lengths and are rounded with radii (r₅ₐ, r_{5b}, r_{5c}) which are 50% to 150% of the extension length (e₅ₐ, e_{5b}, e_{5c}, e_{5'a}, e_{5'b}) of the respective portion (5a, 5b, 5c, 5'a, 5'b).

5. Pneumatic vehicle tyre according to one or more of Claims 1 to 4, **characterized in that** the two groove flanks (5, 5', 6) of the circumferential groove (2, 2', 3) are configured to be identical.

6. Pneumatic vehicle tyre according to one or more of Claims 1 to 5, **characterized in that** the groove flanks (5, 5', 6) of the circumferential groove (2, 2', 3) are formed symmetrically to the centre plane(s) of the circumferential groove (2, 2', 3).

7. Pneumatic vehicle tyre according to one or more of Claims 1 to 6, **characterized in that**, in the case of groove flanks (5, 6) each having exactly three of the portions (5a, 5b, 5c) forming a corrugation crest or a corrugation trough, the radially outermost portion (5a) of the groove flanks (5, 6) that forms the corrugated shape is a corrugation crest which transitions tangentially into a transition portion (5d) which is rounded with a radius (r_{5d}) of 0.7 mm to 1.2 mm and which transitions into the outer surface (4a).

8. Pneumatic vehicle tyre according to one or more of Claims 1 to 7, **characterized in that** the tread (1) has a plurality of circumferential grooves (2, 2', 3) whose groove flanks (5, 5', 6) are continuously corrugated.

9. Pneumatic vehicle tyre according to one or more of Claims 1 to 8, **characterized in that** the tread (1) has at least one circumferential groove (2) running around straight in the circumferential direction, the groove flanks (5) of which are continuously corrugated.

10. Pneumatic vehicle tyre according to one or more of Claims 1 to 9, **characterized in that** the tread (1) has at least one circumferential groove (3) running around in a corrugated shape in the circumferential direction, the groove flanks (6) of which are continuously corrugated.

## Revendications

1. Pneumatique de véhicule avec une bande de roulement (1) avec des éléments positifs de profil, tels que des nervures de profil (4), qui présentent des surfaces extérieures (4a) entrant en contact avec le sol lors du roulement du pneu, et avec au moins une rainure circonférentielle (2, 2', 3) s'étendant dans la direction circonférentielle, réalisée à la profondeur de profil (Tₚ) prévue, qui, considérée en coupe transversale, présente deux flancs de rainure (5, 5', 6) opposés l'un à l'autre et un fond de rainure (7) reliant les flancs de rainure (5, 5', 6) entre eux, globalement en forme de U et symétrique par rapport au plan médian (M) de la rainure circonférentielle (2, 3) et une largeur qui augmente depuis le fond de rainure (7) jusqu'aux surfaces extérieures (4a), les flancs de la rainure (5, 5', 6), considérés en coupe transversale, étant conçus sous forme ondulée continue avec au moins une section (5a, 5b, 5c) arrondie vers l'extérieur, formant une crête d'onde et avec au moins une section (5b, 5'a) arrondie vers l'intérieur, formant un creux d'onde, ces sections (5a, 5'a, 5b, 5'b, 5c) se rejoignant tangentiellement et les sections (5'b, 5c) radialement les plus intérieures des flancs de rainure (5, 5', 6) se rejoignant tangentiellement, c'est-à-dire sans inflexion, dans le fond de rainure (7),
**caractérisé en ce que**
les flancs de rainure (5, 6) présentent soit respectivement exactement trois des sections (5a, 5b, 5c) formant une crête d'onde ou un creux d'onde, les sections (5a, 5b, 5c) s'étendant dans la direction radiale respectivement sur une longueur d'extension (e₅ₐ, e_{5b}, e_{5c}) de 20 % à 30 % de la profondeur de profil (Tₚ), soit
les flancs de rainure (5') présentent respectivement exactement deux des sections (5'a, 5'b) formant une crête d'onde ou un creux d'onde, les sections (5'a, 5'b) s'étendant dans la direction radiale respectivement sur une longueur d'extension (e_{5'a}, e_{5'b}) de 25 % à 40 % de la profondeur de profil (Tₚ).

2. Pneumatique de véhicule selon la revendication 1, **caractérisé en ce que** les section radialement les plus extérieures (5a, 5'a) des flancs de rainure (5, 5', 6) sont respectivement une crête d'onde ou un creux d'onde.

3. Pneumatique de véhicule selon la revendication 1, **caractérisé en ce que** les section radialement les plus intérieures (5'b, 5c) des flancs de rainure (5, 5', 6) sont respectivement une crête d'onde ou un creux d'onde.

4. Pneumatique de véhicule selon l'une quelconque des revendications 1 à 3, **caractérisé en ce que** les sections (5a, 5b, 5c, 5'a, 5'b) présentent des longueurs d'extension (e₅ₐ, e_{5b}, e_{5c}, e_{5'a}, e_{5'b}) dans la direction radiale, qui coïncident largement ou qui sont respectivement inférieures d'au plus 15 % à la plus grande des longueurs d'extension et qui sont arrondies avec des rayons (r₅ₐ, r_{5b}, r_{5c}) qui représentent 50 % à 150 % de la longueur d'extension (e₅ₐ, e_{5b}, e_{5c}, e_{5'a}, e_{5'b}) de la section respective (5a, 5b, 5c, 5'a, 5'b).

5. Pneumatique de véhicule selon une ou plusieurs des revendications 1 à 4, **caractérisé en ce que** les deux flancs de rainure (5, 5', 6) de la rainure circonférentielle (2, 2', 3) sont conçus de manière identique.

6. Pneumatique de véhicule selon une ou plusieurs des revendications 1 à 5, **caractérisé en ce que** les flancs de rainure (5, 5', 6) de la rainure circonférentielle (2, 2', 3) sont réalisés symétriquement par rapport au(x) plan(s) médian(s) de la rainure circonférentielle (2, 2', 3).

7. Pneumatique de véhicule selon une ou plusieurs des revendications 1 à 6, **caractérisé en ce que**, dans le cas de flancs de rainure (5, 6) avec chacun exactement trois des sections (5a, 5b, 5c) formant une crête d'onde ou un creux d'onde, la section radialement la plus extérieure (5a) des flancs de rainure (5, 6) formant la forme d'onde est une crête d'onde qui se transforme tangentiellement en une section de transition (5d) arrondie avec un rayon (r_{5d}) de 0,7 mm à 1,2 mm, qui se transforme en la surface extérieure (4a).

8. Pneumatique de véhicule selon une ou plusieurs des revendications 1 à 7, **caractérisé en ce que** la bande de roulement (1) présente plusieurs rainures circonférentielles (2, 2', 3) dont les flancs de rainures (5, 5', 6) sont conçus sous forme ondulée continue.

9. Pneumatique de véhicule selon une ou plusieurs des revendications 1 à 8, **caractérisé en ce que** la bande de roulement (1) présente au moins une rainure circonférentielle (2) s'étendant en ligne droite dans la direction circonférentielle, dont les flancs de rainure (5) sont conçus sous forme ondulée continue.

10. Pneumatique de véhicule selon une ou plusieurs des revendications 1 à 9, **caractérisé en ce que** la bande de roulement (1) présente au moins une rainure circonférentielle (3) s'étendant sous forme ondulée dans la direction circonférentielle, dont les flancs de rainure (6) sont conçus sous forme ondulée continue.
